# EUROPEAN PATENT APPLICATION

(11) **EP 1 334 812 A2**
(43) Date of publication of application: **13.08.2003**
(21) Application number: 03001505.1
(22) Date of filing: 23.01.2003
(51) Int. Cl.: B28B 11/24, B29C 67/24, B28B 7/36

(54) **Detachable heating pellicle, in particular for the production of slabs of marble agglomerates or the like obtained with binders made of thermosetting resins**

(30) Priority: 07.02.2002 IT VR20020007
(71) Applicant: Brutti, Franco, 37128 Verona (IT)
(72) Inventor: Brutti, Franco, 37128 Verona (IT)
(74) Representative: Savi, Alberto

(57) **Abstract**

A detachable pellicle is proposed to improve and simplify the process of production of slabs made of marble agglomerate. In particular, the heating system for heating the material to be polymerized is simplified and the removal of the protective is facilitated at the end of the baking phase and before the start of the subsequent slab working phase.

The present invention refers to the union of a detachable polypropylene pellicle, which can take various forms, or a silicone polyester pellicle with at least an aluminium sheet or a tin sheet or a copper sheet or a sheet made of another conductive metal that can be reduced to a thin sheet.

The conductive metal sheet, which conducts electricity, can have a difference in electric potential in certain points so that it is possible to reach the start temperature that starts the exothermic reaction of polymerization with or without pressure.

## Description

The present invention proposes a detachable heating pellicle, in particolar for the production of slabs made of marble agglomerates or the like obtained with binders made of thermosetting resins.

A detachable pellicle is proposed to improve and simplify the process of production of slabs made of marble agglomerates. In particular, the heating system for heating the material to be polymerized is simplified and the removal of the protective is facilitated at the end of the baking phase and before the start of the subsequent slab working phase.

As is known, currently the marble agglomerate slabs are produced with a process in which the mixture to be polymerized is poured in suitable moulds.

The lower surface and the upper surface of each slab is covered with a suitable protective. This protective usually consists of a paper sheet or a detachable sheet to permit the slab to be pressed and placed in an oven or kiln that comprises 10-18 shelves. The kiln shelves are arranged over each other and are provided with respective covers to permit a resin baking and polymerization:

The conventional kilns for baking the slabs to be polymerized are provided with coils and each single shelf is fed with a diathermic oil to be heated at a temperature of 80-120° C.

However, there are many problems in this kind of plant. The main problems are the following:
- problems of installation due to the necessity of isolating and differentiating the circuits of the lower planes from the circuits of the upper planes. Indeed, it is necessary to control the temperatures between the upper part and the lower part of the slab in order to prevent the slab from bending;
- problems of installation due to the necessity that the said planes must be displaced vertically to permit the slabs to remain in the kiln for 20-40 minutes, which makes an interruption of the protective band before and after each slab necessary;
- safety problems due to the possibility that the circulating diathermic oil may go out accidentally and burn;
- high costs due to the big mass of oil to be heated, to the necessity of employing a thermal station and to the high losses of heat which are very difficult to be reduced.

The aim of the present invention is to conceive and carry out a new detachable pellicle which optimizes the detachment of the slabs from their respective moulds when the baking process has finished. In addition, this pellicle permits a baking process that makes the conventional complex heating kilns or ovens unnecessary.

In particular, the pellicle in question is especially useful when it is utilized in the processes for the production of agglomerates made of marble or sand or quartz or other suitable materials to be bound with a resin.

By utilizing the pellicle in question it is possible to obtain more considerable advantages than the present productive systems as regards the operative aspects, the plant itself and the cost of production.

All the above listed aims and advantages are reached according to the present invention by utilizing a detachable heating pellicle, in particular for the production of slabs of marble agglomerates or the like, which agglomerates are obtained with binders made of thermosetting resins, characterized in that a detachable pellicle made of polypropylene in its various forms or made of silicone polyester or silicone nylon is coupled with at least a sheet made of aluminium or tin or copper or other conductive metals to be reduced in sheets or thin plates and that a difference of electric potential is applied to the said conductive metal in precise points and in predetermined times in order to reach the start temperature of the exothermic reaction of polymerization with or without pressure, which makes the detachable protective conductive electrically. In this way, it is possible to heat the material as completely as possible so as to reach the start temperature of the reaction of polymerization.

Further features and details of the present invention will be better understood from the following specification of the preferred embodiment, which specification is given as an example that does not limit the invention itself.

Generally speaking, the said detachable heating pellicle is made of polypropylene (copolymers and homopolymers) in its various forms such as cast, extruded, coextruded, mono-bioriented forms or made of silicone polyester or silicone nylon.

The novelty of the present invention consists in the fact that the pellicle is coupled with a thin foil of aluminium or tin or copper or other metals apt to be reduced in thin sheets or foils.

This particular coupling permits to obtain an anti-adesive function so that the pellicle does not adhere to an agglomerate consisting of marble or sand or quartz with a hardening resin, there being thus the possibility of heating the material in an effective way by applying a difference of electric potential in precise points in order to reach the start temperature of the exothermic reaction of polymerization with or without pressure.

Many advantages can be, therefore, obtained with this specific coupling as is described below.

Firstly, it is possible to easily vary the flux of electric power passing through the said coupling and consequently, it is possible to easily vary and differentiate the temperatures of the upper and lower parts of the slab.

Besides, it is possible to apply a difference of potential to different points of the plant. This can be done, for instance, by pre-heating the material just poured in the mould. In this way, there may be evident time advantages because it is possible to anticipate the start temperature of the reaction of polymerization, if necessary.

In addition, the temperature of the material under the press can be easily raised in order to exactly reach here the temperature level at which the material becomes as plastic as possible. In this way, the time of vibro-compaction can be reduced, which is advantageous especially when the plant is equipped with movable components stressed by vibrators. The reduction of the working time involves a reduction of the wear of such components.

The heat exchange occurs only between the two protective sheets, one sheet being placed on the upper surface and the other sheet being placed on the lower surface. The heat exchange can be circumscribed easily and insulated thermally so that the whole applied electric power is utilized only to heat the material to be polymerized.

Besides, unlike the known plants, the lateral displacements of the pressed slab (not polymerized yet) are not necessary. These displacements involve an interruption of the paper band, which provokes slab deformations owing to the lateral pushes which cause undulations in the paper.

The movements of the slab are always obtained by drawing the protective plastic film. In this way, the deformations are much reduced and the path of the slab can be rectilinear without any interruption of the protective.

The pellicle according to the present invention always permits to utilize in-line kilns or ovens which do not need any lateral or vertical displacements and therefore, the detachment of the two protective sheets, i.e. the upper sheet and the lower sheet, takes place in a very simple and effective manner since it is sufficient to rewind both protectives on upper and lower rolls. Then, these rolls can be used again.

The said kilns or ovens are very simple, essential and cheap. If necessary, they can be equipped with a hydraulic press which presses the material which has been vibro-compacted or not. In this way, the differences in thickness of the slab are reduced and it is no more necessary to calibrate the slab after the baking. In any case, the quantity of material to be removed to obtain well-calibrated slabs is reduced.

Obviously, the whole system as well as the differences in electric potential to be applied to the metal part of the pellicle can be controlled by an electronic station of adequate power and capacity.

A technician of the art can make modifications and changes in this invention, for instance for an utilization of detachable pellicles made of different metals, to obtain solutions which are to be considered as included in the scope of protection of this invention as further explained in the following claims.

## Claims

1. A detachable heating pellicle, in particular for the production of slabs of agglomerates made of marble, sand, quartz or the like, which agglomerates are obtained by utilizing thermosetting resins as binders, **characterized in that** the said detachable pellicle made of polypropylene in its various forms or made of silicone polyester or silicone nylon is coupled with at least a sheet made of aluminium or tin or copper or other conductive metals to be reduced in sheets or thin plates and that a difference in electric potential is applied to the said conductive metal sheet in precise points in order to reach the start temperature of the exothermic reaction of polymerization with or without pressure.

2. A detachable heating pellicle as claimed in claim 1, **characterized in that** it permits to utilize in-line kilns or ovens which do not need lateral or vertical displacements, the detachment of the two protective sheets, i.e. the upper sheet and the lower sheet, being thus facilitated and simplified.

3. A detachable heating pellicle as claimed in the foregoing claims, **characterized in that** it permits to utilize very simple essential means such as kilns or ovens for the baking of the slabs to be polymerized at a very low cost, which means can be equipped, if necessary, with simple hydraulic presses to further press the material, which has been vibro-compacted or not.

4. A detachable heating pellicle as claimed in the foregoing claims, **characterized in that** the heat exchange occurs only between the two protective sheets, i.e. the sheet placed on the upper surface and the sheet placed on the lower surface of the slab, which sheets are closely united to the slab itself so that the heat exchange can be circumscribed easily and the whole applied electric power is utilized to heat only the material to be polymerized.

5. A detachable heating pellicle as claimed in the foregoing claims, **characterized in that** the temperature of the material under the press can be easily raised in order to exactly reach here the temperature level at which the material becomes as plastic as possible so that the time of vibro-compaction can be reduced.

6. A detachable heating pellicle as claimed in the foregoing claims, **characterized in that** the whole system as well as the differences in electric potential applied to the metal part of the pellicle can be controlled manually or by an electronic station of adequate power and capacity.
